# EUROPÄISCHE PATENTSCHRIFT

(11) **EP 2 646 264 B1**
(45) Veröffentlichungstag und Bekanntmachung des Hinweises auf die Patenterteilung: **24.08.2016**
(21) Anmeldenummer: 11784470.4
(22) Anmeldetag: 11.11.2011
(51) Int. Cl.: B60C 11/12

(54) **FAHRZEUGLUFTREIFEN**
VEHICLE TIRE
PNEU POUR VEHICULE

(30) Priorität: 01.12.2010 DE 102010060933
(43) Veröffentlichungstag der Anmeldung: 09.10.2013
(73) Patentinhaber: Continental Reifen Deutschland GmbH, 30165 Hannover (DE)
(72) Erfinder: NOGA, Mareile, 30171 Hannover (DE); DIENSTHUBER, Franz, 30559 Hannover (DE); SENG, Matthias, 30449 Hannover (DE)
(74) Vertreter: Preusser, Andrea
(86) Internationale Anmeldenummer: PCT/EP2011/069922
(87) Internationale Veröffentlichungsnummer: WO 2012/072404

(56) Entgegenhaltungen:
- EP-A1- 2 138 328
- JP-A- 2001 105 808
- JP-A- 2001 163 015

## Beschreibung

Die Erfindung betrifft einen Fahrzeugluftreifen, insbesondere für den Einsatz unter winterlichen Fahrbedingungen, mit einem Laufstreifen mit zumindest einer in Umfangsrichtung umlaufenden Profilblockreihe, deren Profilblöcke Profilblockkanten aufweisen, welche Quernuten begrenzen, welche die einzelnen Profilblöcke innerhalb der Profilblockreihe voneinander trennen, wobei die Profilblöcke jeweils zumindest zwei, zumindest im Wesentlichen parallel zueinander verlaufende Einschnitte aufweisen, deren Erstreckung im jeweiligen Profilblock sich am Verlauf der die Quernuten begrenzenden Profilblockkanten orientiert und welche Einschnitte einen mittleren Abschnitt und zwei Randabschnitte aufweisen, wobei der mittlere Abschnitt der tiefste Abschnitt ist und die beiden Randabschnitte unterschiedliche Tiefen aufweisen.

Dokument JP 2001163015 zeigt einen gattungsgemäßen Fahrzeugluftreifen.

Es ist bekannt und üblich, Fahrzeugluftreifen, die für den Einsatz unter winterlichen Fahrbedingungen vorgesehen sind, mit Profilblöcken im Laufstreifen zu versehen, die jeweils eine Anzahl von Einschnitten mit einer Breite zwischen 0,4 mm und 0,6 mm aufweisen. Diese Einschnitte können auf unterschiedliche Weise ausgeführt sein, so ist es beispielsweise üblich, in Draufsicht wellen-, zickzack-förmige oder gerade verlaufende Einschnitte oder Einschnitte mit einer Kombination aus geraden, zickzack- oder wellenförmigen Abschnitten vorzusehen. Es ist bekannt, dass Einschnitte die Quersteifigkeit und die Umfangssteifigkeit des jeweiligen Profilblockes beeinflussen, da sie die Profilblöcke in mehrere "Teile" - Profilblockelemente - gliedern und derart die Steifigkeit des Blockes und damit des gesamten Laufstreifens reduzieren. Eine zu geringe Steifigkeit des Laufstreifens würde das Trockenfahrverhalten des Reifens beeinträchtigen. Um diesem Effekt entgegen zu wirken, ist es üblich, die in Umfangsrillen mündenden Randabschnitte der Einschnitte seichter auszuführen als den mittleren Abschnitt. Dabei können die beiden Randabschnitte eines Einschnittes übereinstimmend oder unterschiedlich tief sein. Profilblöcke mit Einschnitten mit übereinstimmend tiefen und gegenüber dem mittleren Abschnitt angehobenen Randabschnitten reiben sich ungleichmäßig ab, da jene Randbereiche der Profilblöcke, die den Umfangsrillen benachbart sind, steifer sind als der mittlere Bereich der Profilblöcke. Die steiferen Randbereiche können im Vergleich zur weicheren Profilblockmitte beim Abrollen des Reifens im Latsch in Umfangsrichtung nicht ausweichen und reiben dadurch stärker ab, es entsteht ein sogenannter "balliger" Abrieb. Zusätzlich ändert sich mit zunehmendem Abrieb des Reifens merklich das Erscheinungsbild des Laufstreifens, wenn die Randabschnitte abgerieben sind, ist nur mehr die Blockmitte durch die mittleren Abschnitte der Einschnitte geteilt. Bei Einschnitten, deren beide Randabschnitte unterschiedlich hoch angehoben sind, ändert sich das optische Erscheinungsbild beim Abrieb abschnittsweise, solche Einschnitte bewirken aber eine unterschiedliche Umfangssteifigkeit über die Profilblockbreite, weil dort, wo sich die Randabschnitte mit der geringeren Tiefe befinden, der Profilblock steifer ist, was zu einer unterschiedlichen Kantenausprägung beim Latschdurchlauf und einer Beeinträchtigung der Schneeperformance führen kann.

Der Erfindung liegt die Aufgabe zugrunde, bei einem Reifen der eingangs genannten Art, die Einschnitte derart auszuführen, dass die Umfangssteifigkeit der Profilblöcke vergleichmäßigt wird.

Gelöst wird die gestellte Aufgabe erfindungsgemäß dadurch, dass zumindest der mittlere Abschnitt jener Einschnitte, welche zu den Profilblockkanten, die Quernuten begrenzen, benachbart verlaufen, einen spitzen Winkel mit dieser Profilblockkante einschließt, wobei der eine geringere Tiefe aufweisende Randabschnitt dieser Einschnitte an jenem Ende des mittleren Abschnittes anschließt, welches den geringeren Abstand zur benachbarten Profilblockkante aufweist.

Bei der Erfindung wird daher auf besonders einfache Weise die Umfangssteifigkeit der Profilblöcke vergleichmäßigt, indem die Einschnitte zu den Profilblockkanten geneigt verlaufen und die tieferen und seichteren Randabschnitte derart angeordnet werden, dass sie eine ansonsten zu erwartende unterschiedlich hohe Umfangssteifigkeit kompensieren. Die gleichmäßige Umfangssteifigkeit hat eine gleichmäßige Kantenbildung beim Latschdurchlauf zur Folge, wodurch die Winterperformance, insbesondere die Schneeperformance des Reifens, verbessert wird.

Für eine möglichst optimale Vergleichmäßigung der Umfangssteifigkeit der Profilblöcke ist es von Vorteil, wenn der Winkel, unter dem zumindest die mittleren Abschnitte der Einschnitte zu den jeweils benachbarten Profilblockkanten verlaufen, zwischen 2° und 15° beträgt.

Dabei ist es vorteilhaft, wenn sämtliche in den Profilblöcken vorgesehenen Einschnitte parallel zueinander verlaufen, um gleichermaßen Griffkanten zur Verfügung zu stellen.

Bei einer möglichen Ausführungsvariante der Erfindung verlaufen die Randabschnitte, welche seichter ausgeführt sind als der mittlere Abschnitt und unterschiedliche Tiefen aufweisen, jeweils in Verlängerung des mittleren Abschnittes. Solche Einschnitte weisen in Draufsicht einen geraden Verlauf auf. Bei einer anderen Ausführungsvariante der Erfindung verlaufen die Randabschnitte unter stumpfen Winkeln zum mittleren Abschnitt, wobei der Randabschnitt mit der größeren Tiefe in Richtung zur benachbarten Profilblockkante und der Randabschnitte mit der geringeren Tiefe von der benachbarten Profilblockkante weg weisend verlaufen. Je nach der Anordnung der Randabschnitte lässt sich die Umfangssteifigkeit der Profilblöcke bzw. der von den Einschnitten in den Profilblöcken gebildeten Profilblockelementen unterschiedlich beeinflussen und es lassen sich darüber hinaus auch die Griffeigenschaften beeinflussen.

Der mittlere Abschnitt erfindungsgemäß ausgeführter und angeordneter Einschnitte sollte eine Längserstreckung von mindestens 50 % der Längserstreckung der Einschnitte im Profilblock aufweisen. Seine Tiefe sollte zwischen 70 % und 90 % der Profiltiefe betragen. Diese Maßnahmen sind von Vorteil, um ein gutes Öffnen der Einschnitte unter Last beim Latschdurchgang sicherzustellen, sodass eine gute Schnee-Schnee-Reibung gewährleistet ist. Zur Abstimmung und Beeinflussung der Quer- und Umfangssteifigkeit der Profilblöcke ist es ferner von Vorteil, wenn der seichtere Randabschnitt eine Tiefe aufweist, die zwischen 10 % und 30 % der Profiltiefe beträgt und wenn der tiefere Randabschnitt eine Tiefe aufweist, die zwischen 40 % und 60 % der Profiltiefe beträgt.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 eine Draufsicht auf einen Umfangsabschnitt eines Laufstreifens eines Fahrzeugluftreifens mit einer Ausführungsvariante der Erfindung,
Fig. 2 eine Draufsicht auf einen Profilblock aus Fig. 1 in vergrößerter Darstellung,
Fig. 3 einen Schnitt entlang der Linie III-III der Fig. 2,
Fig. 4 einen Schnitt entlang der Linie IV-IV der Fig. 2,
Fig. 5 eine Draufsicht auf einen Profilblock mit einer weiteren Ausführungsvariante der Erfindung und
Fig. 6 und Fig. 7 Schnitte entlang der Linien VI-VI und VII-VII der Fig. 5.

Die Erfindung befasst sich mit einer besonderen Ausgestaltung von Einschnitten in Laufstreifen von PKW-Reifen, die für einen Einsatz unter winterlichen Fahrbedingungen besonders gut geeignet sind.

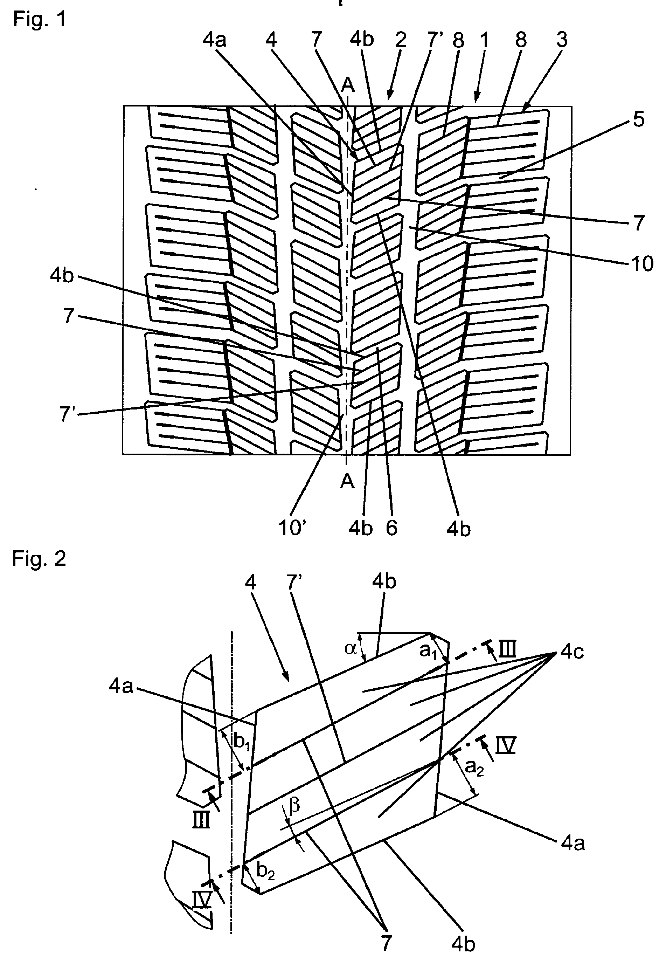

Fig. 1 zeigt einen Umfangsabschnitt eines beispielhaft laufrichtungsgebunden ausgeführten Laufstreifenprofils, welches in jeder Laufstreifenhälfte schulterseitig eine breite, Blockreihe 1 sowie in der Laufstreifenmitte zwei weitere, zentrale Blockreihen 2 aufweist. Jede Blockreihe 1 weist Profilblöcke 3 auf, welche durch Quernuten 5, die im Wesentlichen in Laufstreifenquerrichtung verlaufen, voneinander getrennt sind. Jede zentrale Blockreihe 2, welche von der benachbarten schulterseitigen Blockreihe 1 durch eine in Umfangsrichtung umlaufende Umfangsrille 10 getrennt ist, weist Profilblöcke 4 und Quernuten 6 auf, welche bei der gezeigten Ausführungsform in Verlängerung der Quernuten 5 verlaufen. Die zentralen Blockreihen 2 grenzen an eine entlang des Reifenäquators A-A in Umfangsrichtung umlaufende zentrale Umfangsrille 10'. Die Profilblöcke 4 sind in Draufsicht annähernd parallelogrammförmig gestaltet mit jeweils zwei in Umfangsrichtung verlaufenden Blockkanten 4a und zwei unter einem spitzen Winkel α zur Laufstreifenquerrichtung verlaufenden Blockkanten 4b, wobei α je nach Profilgestaltung zwischen 20° und 45° gewählt wird. Die schulterseitigen Blöcke 3 sind in Laufstreifenquerrichtung langgestreckt und ebenfalls parallelogrammförmig. Die Profilblöcke 3 und 4 sind lediglich vereinfacht dargestellt und können auch anders gestaltet sein, beispielsweise eine Trapezform aufweisen.

Die Profilblöcke 3 und 4 weisen jeweils eine Anzahl von Einschnitten 7, 7', 8 auf, welche bei der gezeigten Ausführungsform die Profilblöcke 3 und 4 durchqueren, eine Breite zwischen 0,4 mm und 0,6 mm aufweisen und jeweils in den Profilblöcken 3 und 4 parallel bzw. nahezu parallel zueinander verlaufen. Die Anzahl der Einschnitte 7, 7', 8 pro Profilblock 3 und 4 beträgt zwischen zwei und vier, je nach der Größe der Umfangserstreckung der Profilblöcke 3 und 4. In den schulterseitigen Profilblöcken 3 verlaufen die Einschnitte 8 parallel zu den die Quernuten 5 begrenzenden Profilblockkanten, ihr gegenseitiger Abstand sowie ihr Abstand zu diesen Profilblockkanten ist im Wesentlichen gleich groß.

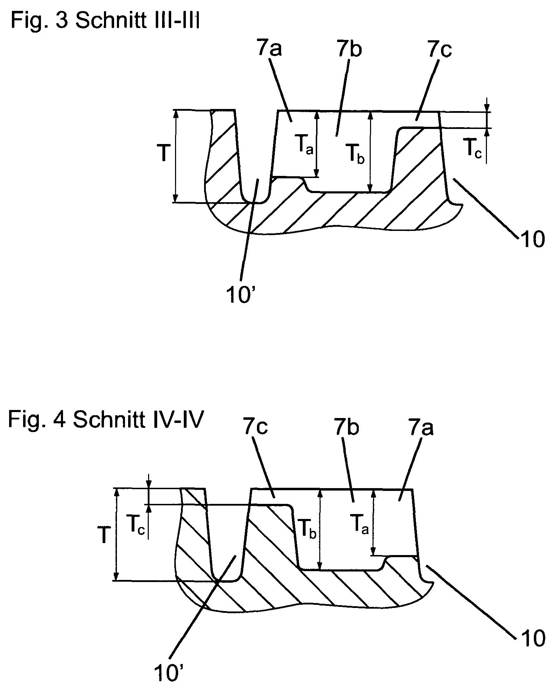

Die in den Profilblöcken 4 vorgesehenen Einschnitte 7, 7' weisen in Draufsicht einen geraden Verlauf auf und sind zueinander parallel. Ihr Verlauf quer über den jeweiligen Profilblock 4 orientiert sich am Verlauf der Quernuten 6, wobei sie aber zu den Profilblockkanten 4b nicht parallel verlaufen sondern unter einem spitzen Winkel β, welcher zwischen 2° und 15° beträgt. Die spezielle Anordnung der Einschnitte 7, 7' sowie deren sonstige Ausgestaltung wird nun anhand der Fig. 2, welche einen Draufsicht auf einen Profilblock 4 zeigt, sowie anhand der Schnittdarstellungen der Figuren 3 und 4 näher erläutert. Die Einschnitte 7, 7' teilen den Profilblock 4 in vier Blockelemente 4c, deren Flächen vorzugsweise im Wesentlichen gleich groß sind. Nachdem die Einschnitte 7, 7' mit den die Quernuten 6 begrenzenden Profilblockkanten 4b den Winkel β einschließen, weist der in Fig. 2 obere, benachbart zur Profilblockkante 4b verlaufende Einschnitt 7 an seinem in die Umfangsnut 10 mündenden Ende zur Profilblockkante 4b einen Abstand a₁ auf, welcher geringer ist als der Abstand b₁ zwischen seinem zweiten in die Umfangsnut 10' mündenden Ende und einer "Verlängerung" der benachbarten Profilblockkante 4b. Das eine Ende des in Fig. 2 unteren und benachbart zur zweiten Profilblockkante 4b verlaufenden Einschnittes 7 weist zu einer "Verlängerung" dieser Profilblockkante 4b einen Abstand a₂ auf, welcher größer ist als der Abstand b₂ zwischen seinem zweiten Ende und der Profilblockkante 4b. Je nach Ausführung kann b₁ gleich groß sein wie a₂ und a₁ gleich groß wie b₂ sein.

Fig. 3 zeigt einen Schnitt mittig durch den oberen Einschnitt 7 und Fig. 4 mittig durch den unteren Einschnitt 7. Der obere Einschnitt 7 weist einen mittleren Abschnitt 7b und zwei an diesen anschließende seitliche Randabschnitte 7a und 7c auf. Im mittleren Abschnitt 7b besitzt der Einschnitt 7 die größte Tiefe T_{b}, die der Profiltiefe T. - der Tiefe der Umfangsrillen 10, 10' - entsprechen kann, bevorzugt jedoch etwas geringer als die Profiltiefe T ist und insbesondere zwischen 70 % und 90 % der Profiltiefe T beträgt. Der Randabschnitt 7a, mit welchem der Einschnitt 7 im Abstand b₁ von der benachbarten Blockkante 4a in die Umfangsrille 10 mündet, weist eine Tiefe Tₐ auf, welche geringer ist als die Tiefe T_{b} und insbesondere zwischen 40 % und 60 % der Profiltiefe T beträgt. Der Randabschnitt 7c ist der seichteste der drei Abschnitte und erstreckt sich bis auf eine Tiefe T_{c}, welche zwischen 10 % und 30 % der Profiltiefe T entspricht. Bei einem PKW Reifen mit einer Profiltiefe von 8 mm beträgt die Tiefe Tₐ beispielsweise zwischen 4 mm und 5,5 mm, T_{c} zwischen 1 mm und 2 mm. Die Übergänge zwischen dem mittleren Abschnitt 7b und den beiden Randabschnitten 7a und 7c werden bekannterweise über steile, nahezu in radialer Richtung verlaufende Übergangsflanken mit Übergangsrundungen gebildet. Der mittlere Abschnitt 7b des Einschnittes 7 verläuft über 50 % bis 70 % der Längserstreckung des Einschnittes 7 im Profilblock 4, die beiden Randabschnitte 7a und 7c insbesondere über jeweils die Hälfte der verbleibenden Längserstreckung, wobei die Randabschnitte 7a und 7c auch unterschiedliche Längen aufweisen können.

Der untere Einschnitt 7 im Profilblock 4 ist analog zum oberen Einschnitt 7 des Profilblocks 7 ausgeführt, jedoch mit dem Unterschied, dass beim unteren Einschnitt 7 die Positionen der beiden Randabschnitte 7a und 7c gegenüber jenen der Randabschnitte 7a und 7c des oberen Einschnittes 7 vertauscht sind, sodass sich auch beim unteren Einschnitt 7 der seichtere Randabschnitt 7c dort befindet, wo der Einschnitt den geringeren Abstand b₂ zur Profilblockkante 4b aufweist, und sich der Randabschnitt 7a dort befindet, wo der größere Abstand b₂ zur Profilblockkante 4b vorhanden ist.

Der mittlere Einschnitt 7' kann ebenfalls in drei Abschnitte gegliedert sein, wobei seine Randabschnitte übereinstimmende Tiefen aufweisen können.

Erfindungsgemäß ausgeführte und angeordnete Einschnitte 7 vergleichmäßigen die Umfangssteifigkeit des Profilblockes und gewährleisten eine gute Winterperformance, auch bei zunehmenden Abrieb. Würden Einschnitte mit unterschiedlich tiefen Randabschnitten parallel zu den Quernuten verlaufen, wäre eine unterschiedliche Umfangssteifigkeit der an die Quernuten anschließenden Profilblockelemente die Folge, beim seichteren Randabschnitt wäre die Umfangssteifigkeit höher als beim tieferen Randabschnitt. Dies hätte eine unterschiedliche Kantenausprägung der Profilblockelemente beim Durchlauf durch den Latsch zur Folge und würde die Schneeperformance beeinträchtigen. Durch die Anordnung der Einschnitte 7 unter einem Winkel β zu den Profilblockkanten 4b entsteht keine derartige unterschiedliche Umfangssteifigkeit, da sich die Umfangserstreckung dieser Profilblockelemente über die Profilblockbreite ändert. Die Dimensionierung der Randabschnitte sowie die Wahl des Winkels β bestimmen das Ausmaß der Kompensation bzw. den Einfluss auf die Umfangssteifigkeit.

Im Laufstreifen können ferner Profilblöcke 4 vorgesehen sein, die zwei Einschnitte 7 und zwei oder mehr Einschnitte 7' aufweisen, wobei jeweils die beiden den Profilblockkanten 4b benachbart verlaufenden Einschnitte 7 analog zu den beiden oben beschriebenen Einschnitten 7 ausgeführt und angeordnet sind. Weisen die Profilblöcke 4 lediglich zwei Einschnitte 7 auf, so sind diese ebenfalls analog zu den beiden oben beschriebenen Einschnitten 7 ausgeführt und angeordnet.

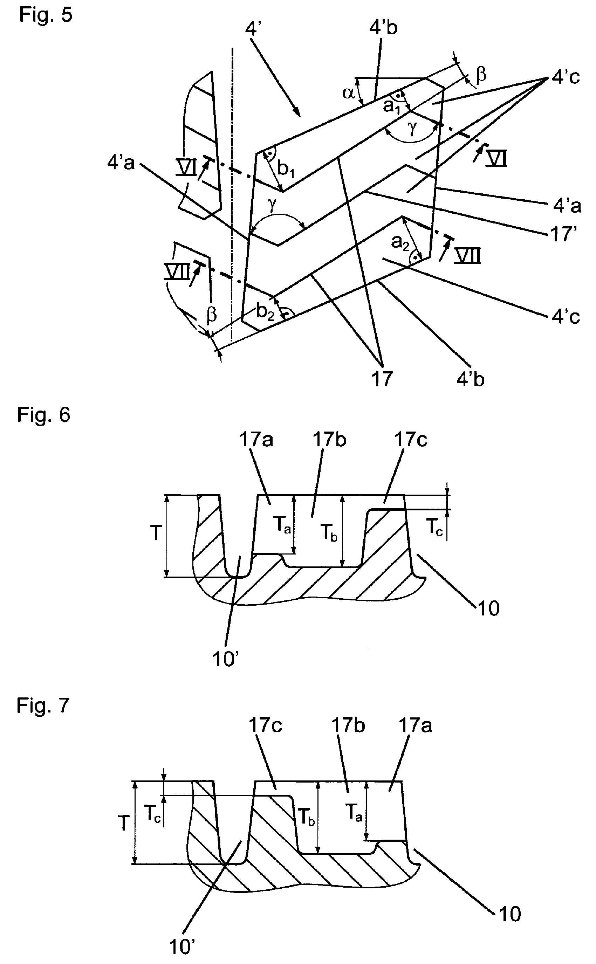

Fig. 5 zeigt eine weitere Ausführungsform eines parallelogrammförmigen Profilblockes 4' mit zwei in Umfangsrichtung verlaufenden Profilblockkanten 4'a, zwei unter dem Winkel α zur Laufstreifenquerrichtung verlaufenden Profilblockkanten 4'b und mit erfindungsgemäß angeordneten und ausgeführten Einschnitten 17, welche den Profilblockkanten 4'b benachbart verlaufen. Ein dritter Einschnitt 17' verläuft zwischen den beiden Einschnitten 17. Die Einschnitte 17 weisen drei Abschnitte 17a, 17b, 17c auf, wobei jeweils der mittlere Abschnitt 17b der längste Abschnitt ist und unter dem Winkel β zur Profilblockkante 4'b verläuft. Die beiden Randabschnitte 17a 17c sind vom mittleren Abschnitt 17b "abgeknickt", sie verlaufen unter einem stumpfen Winkel γ, welcher insbesondere mindestens 100° beträgt. Das eine Ende des mittleren Abschnittes 17b des in Fig. 5 oberen Einschnittes 17 befindet sich in einem Abstand b₁ von der benachbarten Profilblockkante 4'b, das andere Ende in einem Abstand a₁, wobei b₁ > a₁ infolge des Winkels β. Das eine Ende des mittleren Abschnittes 17b des in Fig. 5 unteren Einschnittes 17 befindet sich in einem Abstand b₂ von der benachbarten Profilblockkante 4'b, das andere Ende in einem Abstand a₂, wobei b₂ < a₂ ist. Der Randabschnitt 17a des oberen Einschnittes 17 schließt an jenem Ende des mittleren Abschnittes 17b an, welches sich im Abstand b₁ befindet und verläuft in Richtung zur benachbarten Profilblockkante 4'b, der Randabschnitt 17c, welcher am anderen Ende des mittleren Abschnittes 17b anschließt, verläuft von der Profilblockkante 4'b weg. Die Tiefen Tₐ, T_{b}, T_{c} der einzelnen Abschnitte 17a, 17b, 17c des oberen Einschnittes 17 zeigt die Schnittdarstellung in Fig. 6. Bezüglich der Größe von Tₐ, T_{b} und T_{c} gilt Analoges wie bereits zu Fig. 3 beschrieben. Der mittlere Abschnitt 17b des unteren Einschnittes 17 weist an seinem einen Ende einen Abstand b₂, an seinem anderen Ende eine Abstand a₂ zur benachbarten Profilblockkante 4'b auf, wobei b₂ < a₂. Die Randabschnitte 17a, 17c sind analog zum oberen Einschnitt 17 abgeknickt, ihre Tiefen Tₐ, T_{b} und T_{c} sind der Schnittdarstellung in Fig. 7 zu entnehmen. Der parallel zu den Einschnitten 17 verlaufende Einschnitt 17' kann Randabschnitte mit

übereinstimmenden Tiefen aufweisen, wobei auch bei diesem Einschnitt 17' der mittlere Abschnitt am tiefsten ausgeführt ist.

### Bezugszeichenliste

- 1: Blockreihe
- 2: zentrale Blockreihe
- 3: Profilblock
- 4: Profilblock
- 4a: Profilblockkante
- 4b: Profilblockkante
- 4': Profilblock
- 4'a: Profilblockkante
- 4'b: Profilblockkante
- 5: Quernut
- 6: Quernut
- 7: Einschnitt
- 7a: seitlicher Randabschnitt
- 7b: mittlerer Abschnitt
- 7c: seitlicher Randabschnitt
- 8: Einschnitt
- 10: Umfangsrille
- 10': zentrale Umfangsrille
- 17: Einschnitt
- 17': Einschnitt
- 17a: seitlicher Randabschnitt
- 17b: mittlerer Abschnitt
- 17c: seitlicher Randabschnitt
- a₁, a₂: Abstand
- b₁, b₂: Abstand
- Tₐ: Tiefe
- T_{b}: Tiefe
- T_{c}: Tiefe
- α: Winkel
- β: Winkel
- γ: Winkel

## Patentansprüche

1. Fahrzeugluftreifen, insbesondere für den Einsatz unter winterlichen Fahrbedingungen, mit einem Laufstreifen mit zumindest einer in Umfangsrichtung umlaufenden Profilblockreihe (2), deren Profilblöcke (4, 4') Profilblockkanten (4b, 4'b) aufweisen, welche Quernuten (6) begrenzen, welche die einzelnen Profilblöcke (4) innerhalb der Profilblockreihe (2) voneinander trennen, wobei die Profilblöcke (4) jeweils zumindest zwei, zumindest im Wesentlichen parallel zueinander verlaufende Einschnitte (7, 17) aufweisen, deren Erstreckung im jeweiligen Profilblock (4, 4c) sich am Verlauf der die Quernuten (6) begrenzenden Profilblockkanten (4b, 4'b) orientiert und welche Einschnitte (7, 17) einen mittleren Abschnitt (7b, 17b) und zwei Randabschnitte (7a, 7c; 17a, 17c) aufweisen, wobei der mittlere Abschnitt (7b, 17b) der tiefste und längste Abschnitt ist und die beiden Randabschnitte (7a, 7c; 17a, 17c) unterschiedliche Tiefen aufweisen,
**dadurch gekennzeichnet,**
**dass** zumindest der mittlere Abschnitt (7b, 17b) jener Einschnitte (7), welche zu den Profilblockkanten (4b, 4'b), die Quernuten (6) begrenzen, benachbart verlaufen, einen spitzen Winkel (β) mit dieser Profilblockkante (4b, 4'b) einschließt, wobei der eine geringere Tiefe aufweisende Randabschnitt (7c, 17c) an jenem Ende des mittleren Abschnittes (7b, 17b) anschließt, welches den geringeren Abstand zur benachbarten Profilblockkante (4b, 4'b) aufweist.

2. Fahrzeugluftreifen nach Anspruch 1, **dadurch gekennzeichnet, dass** der Winkel (β), unter dem die mittleren Abschnitte (7b, 17b) der Einschnitte (7, 17) zu den jeweils benachbarten Profilblockkanten (4b, 4'b) verlaufen, zwischen 2° und 15° beträgt.

3. Fahrzeugluftreifen nach Anspruch 1 oder 2, **dadurch gekennzeichnet, dass** die Einschnitte (7, 17) parallel zueinander verlaufen.

4. Fahrzeugluftreifen nach einem der Ansprüche 1 bis 3, **dadurch gekennzeichnet, dass** die Randabschnitte (7a, 7c) in Verlängerung des mittleren Abschnittes (7b) verlaufen.

5. Fahrzeugluftreifen nach einem der Ansprüche 1 bis 3, **dadurch gekennzeichnet, dass** die Randabschnitte (17a, 17c) unter stumpfen Winkeln (γ) zum mittleren Abschnitt (17b) verlaufen.

6. Fahrzeugluftreifen nach Anspruch 5, **dadurch gekennzeichnet, dass** der Randabschnitt (17a) mit der größeren Tiefe (Tₐ) in Richtung zur benachbarten Profilblockkante (4'b) verläuft.

7. Fahrzeugluftreifen nach Anspruch 5, **dadurch gekennzeichnet, dass** der Randabschnitt (17c) mit der geringeren Tiefe (T_{c}) von der benachbarten Profilblockkante (4'b) weg weisend verläuft.

8. Fahrzeugluftreifen nach einem der Ansprüche 1 bis 7, **dadurch gekennzeichnet, dass** der mittlere Abschnitt (7b, 17b) eine Längserstreckung von mindestens 50 % der Längserstreckung der Einschnitte (7, 17) im Profilblock (4, 4') aufweist.

9. Fahrzeugluftreifen nach einem der Ansprüche 1 bis 7, **dadurch gekennzeichnet, dass** der mittlere Abschnitt (7b, 17b) eine Tiefe (T_{b}) aufweist, die zwischen 70 % und 90 % der Profiltiefe (T) beträgt.

10. Fahrzeugluftreifen nach einem der Ansprüche 1 bis 9, **dadurch gekennzeichnet, dass** der seichtere Randabschnitt (7c, 17c) eine Tiefe (T_{c}) aufweist, die zwischen 10 % und 30 % der Profiltiefe (T) beträgt.

11. Fahrzeugluftreifen, nach einem der Ansprüche 1 bis 9, **dadurch gekennzeichnet, dass** der tiefere Randabschnitt (7a, 17a) eine Tiefe (Tₐ) aufweist, die zwischen 40 % und 60 % der Profiltiefe (T) beträgt.

## Claims

1. Pneumatic vehicle tyre, in particular for use in winter driving conditions, comprising a tread having at least one tread bar row (2) which runs around in the circumferential direction and the tread bars (4, 4') of which have tread bar edges (4b, 4'b), which delimit transverse grooves (6), which separate the individual tread bars (4) within the tread bar row (2) from one another, wherein the tread bars (4) each have at least two sipes (7, 17), which run at least substantially parallel to one another and the extent of which in the respective tread bar (4, 4c) is oriented on the basis of the course of the tread bar edges (4b, 4'b) delimiting the transverse grooves (6), and which sipes (7, 17) have a middle portion (7b, 17b) and two peripheral portions (7a, 7c; 17a, 17c), wherein the middle portion (7b, 17b) is the deepest and longest portion and the two peripheral portions (7a, 7c; 17a, 17c) have different depths, **characterized**
**in that** at least the middle portion (7b, 17b) of those sipes (7) that run adjacent to the tread bar edges (4b, 4'b) which delimit transverse grooves (6) form an acute included angle (β) with this tread bar edge (4b, 4'b), wherein the peripheral portion (7c, 17c) that has a smaller depth adjoins that end of the middle portion (7b, 17b) that is at the smaller distance from the adjacent tread bar edge (4b, 4'b).

2. Pneumatic vehicle tyre according to Claim 1, **characterized in that** the angle (β) at which the middle portions (7b, 17b) of the sipes (7, 17) run in relation to the respectively adjacent tread bar edges (4b, 4'b) is between 2° and 15°.

3. Pneumatic vehicle tyre according to Claim 1 or 2, **characterized in that** the sipes (7, 17) run parallel to one another.

4. Pneumatic vehicle tyre according to one of Claims 1 to 3, **characterized in that** the peripheral portions (7a, 7c) run as an extension of the middle portion (7b).

5. Pneumatic vehicle tyre according to one of Claims 1 to 3, **characterized in that** the peripheral portions (17a, 17c) run at obtuse angles (γ) in relation to the middle portion (17b).

6. Pneumatic vehicle tyre according to Claim 5, **characterized in that** the peripheral portion (17a) with the greater depth (Tₐ) runs in the direction of the adjacent tread bar edge (4'b).

7. Pneumatic vehicle tyre according to Claim 5, **characterized in that** the peripheral portion (17c) with the smaller depth (T_{c}) runs away from the adjacent tread bar edge (4'b).

8. Pneumatic vehicle tyre according to one of Claims 1 to 7, **characterized in that** the middle portion (7b, 17b) has a longitudinal extent of at least 50% of the longitudinal extent of the sipes (7, 17) in the tread bar (4, 4').

9. Pneumatic vehicle tyre according to one of Claims 1 to 7, **characterized in that** the middle portion (7b, 17b) has a depth (T_{b}) that is between 70% and 90% of the tread depth (T).

10. Pneumatic vehicle tyre according to one of Claims 1 to 9, **characterized in that** the shallower peripheral portion (7c, 17c) has a depth (T_{c}) that is between 10% and 30% of the tread depth (T).

11. Pneumatic vehicle tyre according to one of Claims 1 to 9, **characterized in that** the deeper peripheral portion (7a, 17a) has a depth (Tₐ) that is between 40% and 60% of the tread depth (T).

## Revendications

1. Pneu de véhicule, en particulier pour l'utilisation dans des conditions de conduite hivernales, comprenant une bande de roulement avec au moins une rangée de blocs profilés périphériques (2) s'étendant dans la direction périphérique, dont les blocs profilés (4, 4') présentent des arêtes de blocs profilés (4b, 4'b) qui délimitent des rainures transversales (6) qui séparent les uns des autres les blocs profilés individuels (4) à l'intérieur de la rangée de blocs profilés (2), les blocs profilés (4) présentant à chaque fois au moins deux entailles (7, 17) s'étendant essentiellement parallèlement les unes aux autres, dont l'étendue dans le bloc profilé respectif (4, 4c) s'oriente sur l'allure des arêtes de blocs profilés (4b, 4'b) limitant les rainures transversales (6), lesquelles entailles (7, 17) présentent une portion centrale (7b, 17b) et deux portions de bord (7a, 7c ; 17a, 17c), la portion centrale (7b, 17b) étant la portion la plus profonde et la plus longue et les deux portions de bord (7a, 7c ; 17a, 17c) présentant des profondeurs différentes, **caractérisé en ce qu'**au moins la portion centrale (7b, 17b) de chacune des entailles (7) qui s'étendent à côté des arêtes de blocs profilés (4b, 4'b) qui délimitent les rainures transversales (6), forme un angle aigu (β) avec cette arête de bloc profilé (4b, 4'b), la portion de bord (7c, 17c) présentant une plus faible profondeur se raccordant à l'extrémité de la portion centrale (7b, 17b) qui présente la plus faible distance à l'arête de bloc profilé adjacente (4b, 4'b).

2. Pneu de véhicule selon la revendication 1, **caractérisé en ce que** l'angle (β) suivant lequel les portions centrales (7b, 17b) des entailles (7, 17) s'étendent par rapport aux arêtes de blocs profilés adjacentes (4b, 4'b) est compris entre 2° et 15°.

3. Pneu de véhicule selon la revendication 1 ou 2, **caractérisé en ce que** les entailles (7, 17) s'étendent parallèlement les unes aux autres.

4. Pneu de véhicule selon l'une quelconque des revendications 1 à 3, **caractérisé en ce que** les portions de bord (7a, 7c) s'étendent dans le prolongement de la portion centrale (7b).

5. Pneu de véhicule selon l'une quelconque des revendications 1 à 3, **caractérisé en ce que** les portions de bord (17a, 17c) s'étendent suivant des angles obtus (γ) par rapport à la portion centrale (17b).

6. Pneu de véhicule selon la revendication 5, **caractérisé en ce que** la portion de bord (17a) ayant la plus grande profondeur (Tₐ) s'étend dans la direction de l'arête de bloc profilé adjacente (4'b).

7. Pneu de véhicule selon la revendication 5, **caractérisé en ce que** la portion de bord (17c) ayant la plus petite profondeur (T_{c}) s'étend à l'écart de l'arête de bloc profilé adjacente (4'b).

8. Pneu de véhicule selon l'une quelconque des revendications 1 à 7, **caractérisé en ce que** la portion centrale (7b, 17b) présente une étendue longitudinale d'au moins 50 % de l'étendue longitudinale des entailles (7, 17) dans le bloc profilé (4, 4').

9. Pneu de véhicule selon l'une quelconque des revendications 1 à 7, **caractérisé en ce que** la portion centrale (7b, 17b) présente une profondeur (T_{b}) qui est comprise entre 70 % et 90 % de la profondeur de profilé (T).

10. Pneu de véhicule selon l'une quelconque des revendications 1 à 9, **caractérisé en ce que** la portion de bord la moins profonde (7c, 17c) présente une profondeur (T_{c}) qui est comprise entre 10 % et 30 % de la profondeur de profilé (T).

11. Pneu de véhicule selon l'une quelconque des revendications 1 à 9, **caractérisé en ce que** la portion de bord la plus profonde (7a, 17a) présente une profondeur (Tₐ) qui est comprise entre 40 % et 60 % de la profondeur de profilé (T).
